# EUROPEAN PATENT APPLICATION

(11) **EP 2 922 285 A1**
(43) Date of publication of application: **23.09.2015**
(21) Application number: 12888394.9
(22) Date of filing: 13.11.2012
(51) Int. Cl.: H04N 5/06

(54) **SMART HOME ACCESS DEVICE**

(71) Applicant: Shenzhen Itoo (Wyrestorm) Technology Limited, Shenzhen, Guangdong 518000 (CN)
(72) Inventor: LIU, Jinian, Shenzhen Guangdong 518000 (CN); HUANG, Sheng, Shenzhen Guangdong 518000 (CN); ZHANG, Yunhe, Shenzhen Guangdong 518000 (CN); LIU, Chuan, Shenzhen Guangdong 518000 (CN)
(74) Representative: ProI European Patent Attorneys
(86) International application number: PCT/CN2012/084548
(87) International publication number: WO 2014/075229

(57) **Abstract**

A smart home access device, comprising a transmission modulation-demodulation module which demodulates a digital transmission signal downloaded via a cable into a video or audio digital signal and an Ethernet signal and for outputting respectively, or also modulates the Ethernet signal by the cable to upload; and in particular, also comprising an Ethernet remote control extension processer which receives and parses the Ethernet signal downloaded by the transmission modulation-demodulation module so as to extract a control signal therefrom, or receives the control signal and encode same into an Ethernet signal for uploading to the transmission modulation-demodulation module; further, also comprising an Ethernet exchange module which exchanges and transmits the downloaded Ethernet signal to at least two Ethernet interfaces, one of the Ethernet interfaces being the interface with the Ethernet remote control extension processor; and even further, also comprising a compressed media player and a signal switching matrix, both being capable of simplifying home wiring, thereby facilitating the upgrade and extension of intelligent control of the home.

## Description

### TECHNICAL FIELD

The present invention relates to an electric signal transmission in the intelligent control or smart home filed, especially to a media and data transmission access device for simplifying the generic cabling.

### BACKGROUND ART

With the high bandwidth development of data transmission as well as the high bandwidth access of fixed network, the multimedia transmission technology has been widely applied and the streaming media transmission technology for real-time transmission of multimedia contents such as audio, video, caption and animation has emerged.

Moreover, the development of smart phone and smart television has promoted the development of buildings toward the direction of intelligent and green management. With the increasing demand for multimedia experience, high definition and lossless transmission of media and data in the buildings is required to be better and better. Based on increasing demand for security, entertainment, sharing, monitoring, energy saving and environmental protection, wirings and equipments in buildings are increased correspondingly and operations also tend to be complicated.

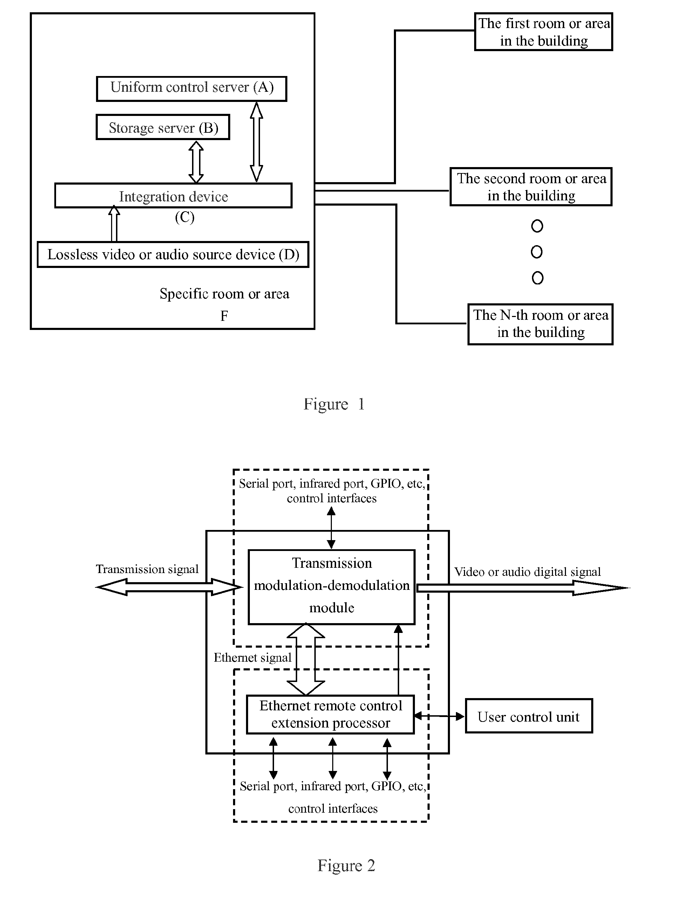

Currently, the general situations of intelligent controls comprehensively achieved in small buildings or houses are as follows:
As shown in Figure 1, each or selected room or area of a building is provided with a display equipment and audio device, including but not limited to a TV set and loudspeaker box; a lossless video or audio source device D (including video source, audio source, etc.) is intensively placed in a specific room or area F. This specific room or area F could refer to a separate area, or a selected room or area provided with display equipment and audio device. The lossless video or audio source device D, including satellite set-top box, blue ray player, etc., can directly output high definition signals.

In order to enable any display equipment or audio device to display or audibly transfer high definition media source contents from such specific room or area F, it is necessary to carry out unified management of the equipments placed in any room or area, and control equipments are arranged in each area or room accordingly. For example, Chinese patent applications "Building Network-based Smart Home Control System" and "Smart Home Control Method and System" with filing numbers of 200410061328.0 and 201110151990.5 respectively refer to this type of framework and make detailed description on unit server, or control between host and slave.

With the increasing diversification of media sources including video monitoring, home entertainment and camera shooting, photo, film and television and music, in order to save mass data, it is necessary to install a storage server B in said specific room or area for the purpose of coding compression and storage of media data. Media data are generally shared between said storage server B and each room or area via streaming media transmission and finally decoded in each room or area for play/display output.

In order to actualize preferable user experience, a uniform control server A is installed in said specific room or area for management and transmission control of media data from different equipments as well as treatment of requests from different rooms or areas, thereby controlling all equipments in each room. In order to simplify the wiring between rooms or areas, a US patent application "Device for Transmitting Digital Video or Data over the Same Wire" with publication number US20110216241A1 discloses a device, which integrates data from different sources to use the same transmission line. So, as shown in Figure 1, the high definition signals from said lossless video or audio source device D and media data from said storage server B which are received and modulated by the integration device C are transferred via communication line. Information exchange can exist between said integration device C and each room or area, with exchange mode being the transmission mode which integrates Ethernet network with high definition transmission. Information exchange between said uniform control server A or storage server B and said integration device C is mainly the transmission via Ethernet network. Under the control of uniform control server A, control signals can be encoded via Ethernet, transferred by means of Ethernet transmission to a remote terminal and decoded by a remote terminal device into original control signals for control execution.

The deficiencies of above prior art lie in that if the technology in said US patent application is not used, the complexity of wiring between said specific room or area F and other rooms or areas will be greatly increased and it is also difficult to achieve unified management of all devices; although said US patent application simplifies wiring, Ethernet (or WIFI) access is required in each room or area to guarantee Ethernet access experience without blind spots, so each room or area is required to be provided with an Ethernet device and multiple devices for data separation except play devices, thereby making device costs greater. In addition, each device needs a power supply so as to result in the complexity of power wiring. More importantly, control contents in a smart home are increasingly expanded, for example, remote control requirements of the household appliances such as air conditioner and refrigerator and the burglary protection and alarm become more and more and are unceasingly improved, so the prior art is difficult to achieve uniform control of all devices.

### CONTENT OF THE INVENTION

The invention is intended to solve the technical issues by means of avoiding the deficiencies of the above the prior art, and put forward a smart home access device in order to resolve the problems of too many devices and wirings in a room or area and difficulty in uniform control of devices.

To solve the above technical problem, basic design of the prevent invention: in the powerful and simplified wiring mode, a single-cable connection is used between a control center and each room or area, said single cable can be used to transmit high definition and lossless media information, compressed media information, and control information compressed and encoded via Ethernet or partial control information not compressed and encoded, and this transmission technology/method requires only a communication line installed between a control center and each room or area, instead of a traditionally integrated, complex and multifunctional device interconnection wiring; therefore, if a separate device is installed in each room to separate and show all information on said communication line, and an Ethernet network is set up in each room or area, then with respect to the existing application of multiple types of devices to achieve information separation, separate information transfer and control interconnection between devices, the complexity of wiring in each room or area will be greatly reduced and the problem of too many devices in a room or area as well as uniform control will be solved.

The technical solution for achieving basic design of this invention is to provide a smart home access device, comprising a transmission modulation-demodulation module with cable access, which demodulates digital transmission signals downloaded via said cable into digital video or audio signals and Ethernet signals to be output by different output terminals respectively, or modulates Ethernet signals input by an Ethernet signal output terminal to be uploaded via said cable; especially, also comprising an Ethernet remote control extension processor, which receives and parses Ethernet signals downloaded by said transmission modulation-demodulation module to separate some control signals, or receives various control signals and encodes them into Ethernet signals to be uploaded to said transmission modulation-demodulation module, so it is not necessary to use multiple types of devices in a room or area to achieve information separation and transfer. Further, said Ethernet remote control extension processor includes a user control unit interface, which is used for electric connection or wireless interconnection with user control unit.

In the above solution, said smart home access device also comprises an Ethernet exchange module, which exchanges and transmits Ethernet signals downloaded by said transmission modulation-demodulation module to at least two Ethernet interfaces, one of which interfaces with said Ethernet remote control extension processor, so a local area network can be set up by reserved Ethernet interface, convenient for simplifying the complexity of control and interconnection wirings between devices by means of local area network.

Further, said smart home access device also comprises a compressed media player, which connects with said Ethernet exchange module via the other Ethernet interface of said Ethernet exchange module, and receives and decodes compressed media code streams carried by Ethernet signals to output digital video or audio signals; and a signal switching matrix, which is used to select one from two digital video or audio signal inputs for outputting, one of which comes from said transmission modulation-demodulation module and the other one of which comes from said compressed media player, thereby avoiding additional configuration of a decoding and playing device in a room or area. For easy reservation of an Ethernet interface to set up a local area network, said Ethernet exchange module in the above solution at least swaps out the third Ethernet interface.

Further, said lossless high-definition signal switching matrix also selects and outputs audio signals. Said smart home access device also comprises an audio power amplifier unit, which is used for power amplification of audio signals.

In the above solution, said smart home access device also comprises a PoE (Power over Ethernet) receiving module, which is used for acquiring the power supply on a twisted-pair copper cable to power said smart home access device.

These measures can reduce device configuration in a room or area as far as possible and greatly simplify home wiring, thereby facilitating the upgrade or extension of intelligent home control.

### DESCRIPTION OF FIGURES

Figure 1 is a schematic diagram for networking mode in a building in the existing intelligent control field or smart home field;
Figure 2 is a schematic diagram for basic structure and module information transmission path of this invention;
Figure 3 is a schematic diagram for extension structure and module information transmission path of this invention;
Figure 4 is a block diagram of hardware in an embodiment of this invention;
Figure 5 is a schematic diagram for work process of an application context of this invention.

### MODE OF CARRYING OUT THE INVENTION MODEL

To further illustrate the principle and structure of the invention, the invention is further described in detail in accordance with the preferable embodiments shown in the figures.

The present invention relates to an integrated device which separates and shows the information from a single cable to achieve all intelligent controls in a room or area where said device is used. Said cable can be copper cable, such as, but not limited to, twisted-pair copper cable above Category 5e, and can also be optical cable.

As shown in Figure 2, basic structure of the invention comprises a transmission modulation-demodulation module and an Ethernet remote control extension processor. Said transmission modulation-demodulation module can at least demodulate and separate digital transmission signals from a cable into digital video or audio signals and Ethernet signals to be output by different output terminals respectively, and further can separate the same into digital video or audio signals, Ethernet signals and some control signals, such as, but not limited to, serial port, infrared or GPIO (General Purpose Input/ Output) signals used for output control of related devices. Said digital video or audio signals include lossless high-definition video or audio signals, such as, but not limited to, HDMI (High Definition Multimedia Interface) signals or DVI (Digital Visual Interface) high definition signals. When there are more devices to be experienced in an area, said transmission modulation-demodulation module can also modulate Ethernet signals input by an Ethernet signal output terminal, or said Ethernet signals with various control signals, to be uploaded via said cable. In a specific embodiment, said transmission modulation-demodulation module can be the device disclosed in said US patent application with publication number of US20110216241A1, and can also be a transmission modulation-demodulation device which uses other new technology of integrated Ethernet, high definition transmission and partial control signal transmission.

Said Ethernet remote control extension processor is the core of this invention, and it receives Ethernet signals downloaded by said transmission modulation-demodulation module, parses and separates various control signals out of them, such as, but not limited to, bidirectional serial port control signals, infrared control signals, GPIO signals or Relay signals, and forms the control interfaces corresponding to these control signals to connect with all functional units in this invention or other external devices outside this invention. Said control interfaces include I2C, SPI, UART, RS232, infrared, RS485, Sensor Contact, Relay Output interfaces and the like; said external devices include but not limited to television set, air conditioner, security and protection device. So, said Ethernet remote control extension processor also receives various control signals from functional units in this invention or other external devices outside this invention, encodes these control signals into Ethernet signals to be uploaded to said transmission modulation-demodulation module and further to a control center via said cable.

Based on the structure in Figure 2, said Ethernet remote control extension processor also provides at least a user control unit interface, so the invention also comprises a user control unit, which achieves electric connection or wireless interconnection with said Ethernet remote control extension processor via said user control unit interface. Said user control unit can be a remote control, which achieves a wireless interconnection with said Ethernet remote control extension processor, such as, but not limited to, infrared transmitter and receiver. Said user control unit can also be a keyboard or touch screen which connects with said Ethernet remote control extension processor.

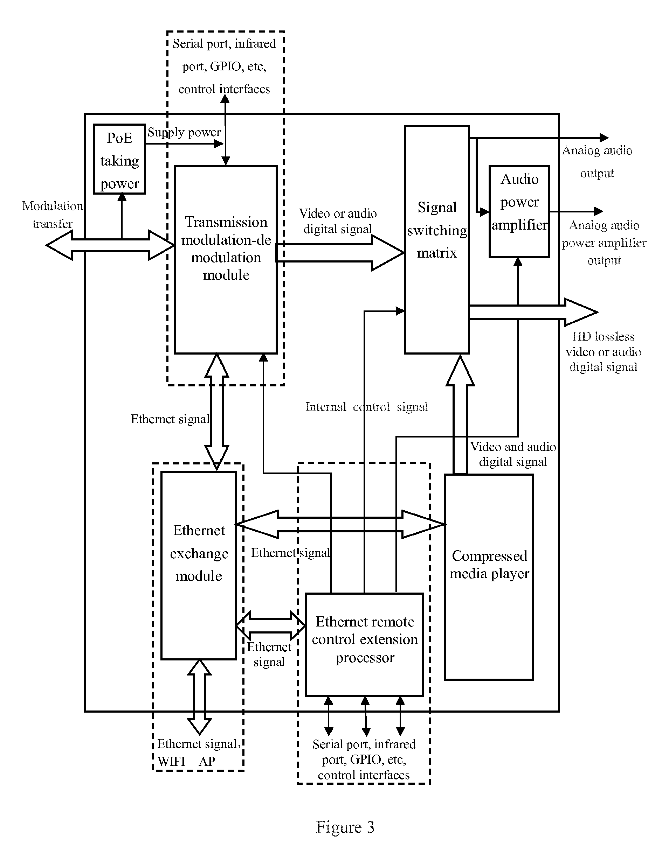

Figure 3 shows other possible extension of the present invention based on the structure in Figure 2. Different combination products can be extended according to actual needs and explained one by one as follows:
Extension 1 forms a multifunctional unit product of video or audio signal separation, Ethernet network layout and control extender. Take a room or area in a building as an example, where a local area network can be set up in such room or area, the structure of this invention in Figure 2 can be additionally provided with an Ethernet exchange module, which is used for exchanging the downloaded Ethernet signals separated by said transmission modulation-demodulation module via Ethernet and then transmitting them to at least two Ethernet interfaces, one of which interfaces with said Ethernet remote control extension processor so as to transfer Ethernet signals to said Ethernet remote control extension processor for parsing, converting and transmitting control signals, and the other one of which externally outputs so as to be used for arrangement of TCP/UDP/IP data channel in said room or area to achieve general broadband internet connection functions. Further, said Ethernet exchange module can also be set to separate at least one WIFI AP functional interface after said Ethernet exchange, thereby cooperating with said other Ether interface to achieve Ethernet signal coverage of overall building without blind spot. So, when any household appliance or controllable element is added in a room or area where this invention is located, it is not necessary to add wirings and additional equipments, for example, if related control information of said household appliance or controllable element is added to the database table of uniform control server, the local area network and control extender achieved by this invention can be used to actualize the control of said household appliance or controllable element. This will be given a detailed example with application context below. Encoding rules of said control information can be provided or agreed by the manufacturer of uniform control server.
Extension 2 forms a multifunctional unit product of video or audio signal separation, Ethernet network layout, control extender and player. Take the situation of the above Extension 1 for example, where a compressed media player can be in addition to an embodiment of this invention based on local area network in a room or area. Accordingly, said Ethernet exchange module is set to separate at least three Ethernet interfaces, the third one of which connects with said Ethernet exchange module and said compressed media player. Said compressed media player receives the compressed media code streams carried by an Ethernet signals, and outputs the second digital video or audio signals playable after decoded. Said compressed media player can achieve the decoding of compressed media code streams as follows: various types of photo and picture files and compressed video and audio code streams, such as, but not limited to, home videos, monitoring videos or movie and television videos, and various types of audio code streams, such as, but not limited to, mp3, AAC, WAV, etc. For this purpose, an embodiment of this invention is also provided with a signal switching matrix, which is used to selectively output digital video or audio signals. Specifically, as shown in Figure 3, said signal switching matrix receives digital video or audio signals from said transmission modulation-demodulation module via one input end, and the second digital video or audio signals from said compressed media player via the other input end so that the signal switching is based on the control instruction from said Ethernet remote control extension processor to selectively output digital video or audio signals. Based on the predominated application of high-definition lossless digital video or audio signal in the high-end experience, said signal switching matrix adopts the switching matrix suitable for lossless high-definition signal switching accordingly.

In addition to the above extensions, product functions can be added based on the user demand for experience, for example, said lossless high-definition signal switching matrix in the above embodiment is designed to enable it to separate an independent audio signal. Said audio signal is output either in a digital form or after converted by a digital analog converter into an analog signal as shown in Figure 3. And for this the above embodiment of this invention is further provided with an audio power amplifier unit, which receives and amplifies analog audio signals output by said lossless high-definition signal switching matrix. Said audio power amplifier unit can be used to drive the ceiling loudspeaker in said room or area to minimize the addition of devices.

For another example, when said room or area connects with the control center via twisted-pair copper cable, any of the above embodiments can be additionally provided with a PoE (Power over Ethernet) receiving module, which receives the power supply from said twisted-pair copper cable to power this invention. This improvement can simplify power wiring, especially when it is inconvenient for a user or a user is unable to provide the power socket, this improved device will be very popular.

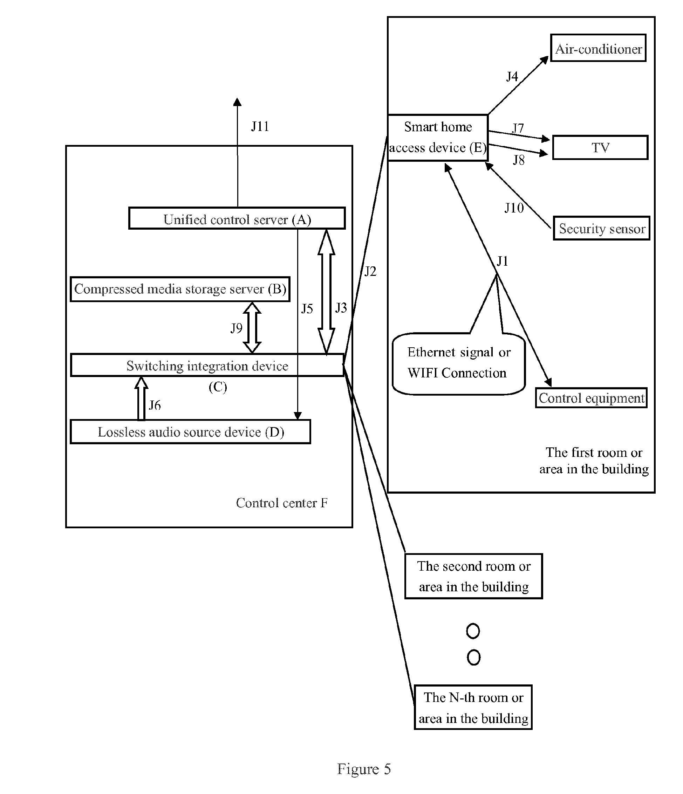

To further describe the present invention, below are some examples given for application contexts of this invention with reference to Figure 5:
The overall networking scheme of a building as shown in Figure 5 comprises a control center F and some rooms or areas connecting with said control center; take the first room or area as an example, where said networking scheme comprises a device of this invention and some equipments, such as, but not limited to, air conditioner, television, security sensing unit or control equipment, wherein the control equipment can interconnect with this invention via, for example, but not limited to, Ethernet or WIFI. The user can give an instruction via said control equipment and then control any equipment in said room or area through this invention's transmission and implementation of such instruction, such as air conditioner, controlling a television in a room to play video sources (such as high definition video disk), controlling and decompressing compressed video sources to achieve playing and showing in different rooms or areas, or collecting the information of a security inspection equipment to give an alarm.

Application Context 1, where an air conditioner in the first room or area is controlled:
Firstly, the user uses said control equipment to give an air-conditioning control instruction, which accesses this invention E via an interconnection channel J1 and passes through this invention to the control center F via an interconnection channel J2; specifically, said interconnection channel J1 is an Ethernet interface or WIFI interface which connects with said Ethernet exchange module on this invention E, so the signal which carries said air-conditioning control instruction accesses said Ethernet exchange module through TCP/UDP/IP connection of Ethernet or WIFI interface, and then is uploaded through the modulation of said transmission modulation-demodulation module to the communication cable represented by said interconnection channel J2.

Then, at the above control center, TCP/UDP/IP data are sent via an interconnection channel J3 through separation of the switching integration device C to said uniform control server A, which acquires relevant independent control instructions or combination control instructions from a database based on control requirements, and still sent to this invention E in the first room or area through said interconnection channel J3, switching integration device C and interconnection channel J2 after encapsulated via Ethernet.

Finally, said transmission modulation-demodulation module of this invention E demodulates and separates network signals into Ethernet signals, which are downloaded to said Ethernet remote control extension processor so that TCP/UDP/IP control protocol is converted into a serial port control protocol (or infrared control protocol) for said air-conditioner to achieve air-conditioning control via an interconnection channel J4. Said interconnection channel J4 includes a serial port of said Ethernet remote control extension processor, and a cable connecting with this invention E and said air-conditioner; or an infrared interface of said Ethernet remote control extension processor, and an infrared interconnection of this invention E with said air-conditioner.

Application Context 2, where high definition video sources are controlled to be played and showed in different areas:
Firstly, the user uses said control equipment to give a relevant control instruction, which accesses this invention E via an interconnection channel J1 and passes through this invention to the control center F via said interconnection channel J2; specifically, the signal which carries said relevant control instruction accesses said Ethernet exchange module, for example, but not limited to, through TCP/UDP/IP connection of Ethernet or WIFI interface, and then is uploaded through the modulation of said transmission modulation-demodulation module to the communication cable represented by said interconnection channel J2.

Then, at the above control center, TCP/UDP/IP data are sent via an interconnection channel J3 through separation of the switching integration device C to said uniform control server A; after said uniform control server A acquires relevant combination control instructions from a database based on control requirements, a lossless video or audio source device D is controlled through an interconnection channel J5 to play or select programs, and the outputs of said lossless video or audio source device D are transmitted through an interconnection channel J6 to said switching integration device C, which encapsulates the television control signals transferred through said interconnection channel J3 into TCP/UDP/IP data via said interconnection channel J3 and re-modulates and integrates high definition lossless signals transferred through said interconnection channel J6, and then sends them to this invention E in the first room or area through said interconnection channel J2.

Finally, said transmission modulation-demodulation module of this invention E demodulates and separates the network signals and high definition lossless video and audio signals from transmission signals, wherein said network signals convert TCP/UDP/IP control protocol into an infrared control protocol for television through said Ethernet remote control extension processor to achieve television showing control via an interconnection channel J7, and high definition lossless video and audio signals are sent via an interconnection channel J8 to said television for playing. Said interconnection channel J7 includes an infrared interface of said Ethernet remote control extension processor, and an infrared interconnection of this invention E with said air-conditioner; said interconnection channel J8 includes a cable connecting with this invention E and said television. For the product in Extension 2 of this invention, after having parsed network signals, said Ethernet remote control extension processor in this procedure also outputs and controls the signals of said lossless high-definition signal switching matrix so that said high definition lossless signals are selectively output by said lossless high-definition signal switching matrix and then transmitted via said interconnection channel J8.

Application Context 3, where compressed video sources are controlled to be played and showed in different areas:
Firstly, the user uses said control equipment to give a relevant control instruction, which accesses this invention E via an interconnection channel J1 and passes through this invention to the control center F via an interconnection channel J2; specifically, the signal which carries said relevant control instruction accesses said Ethernet exchange module, for example, but not limited to, through TCP/UDP/IP connection of Ethernet or WIFI interface, and then is uploaded through the modulation of said transmission modulation-demodulation module to the communication cable represented by said interconnection channel J2.

Then, at the above control center, TCP/UDP/IP data are sent via an interconnection channel J3 through separation of the switching integration device C to said uniform control server A; after said uniform control server A acquires relevant combination control instructions from a database based on control requirements, a compressed media storage server is controlled to select and transmit programs via an interconnection channel J9 to said switching integration device C, which encapsulates the playing control signals (including decompression and television control) transferred through said interconnection channel J3 into TCP/UDP/IP data via said interconnection channel J3 and integrates the program data (such as, but not limited to, TCP/UDP/IP data) transferred through said interconnection channel J9, and then sends them to this invention E in the first room or area through said interconnection channel J2.

Finally, said transmission modulation-demodulation module of this invention E demodulates and separates network signals from transmission signals to be processed by said Ethernet remote control extension processor, which parses and converts TCP/UDP/IP data to separate and output the infrared control protocol signals for television control, the control signals of said compressed media player in this invention and the control signals for said signal switching matrix, wherein said infrared control protocol signals for television achieve television showing control via said interconnection channel J7; said compressed media player is controlled to receive and parse the program data exchanged via said Ethernet exchange module, to select and output them through said signal switching matrix and then to transmit via an interconnection channel J8.

Application Context 4, where the information of security inspection equipment is collected to give an alarm:
Firstly, after given by a security sensing inspection equipment, a warning signal is transmitted via a wired or wireless interconnection channel J10 to said Ethernet remote control extension processor of this invention, and said Ethernet remote control extension processor achieves protocol conversion to encode and encapsulate the physical warning signal into TCP/UDP/IP data, which are demodulated by said transmission modulation-demodulation module and then sent via said interconnection channel J2 to said control center F.

Then, at the above control center, TCP/UDP/IP data are sent via an interconnection channel J3 through separation of the switching integration device C to said uniform control server A; said uniform control server A parses said TCP/UDP/IP data, which are processed correspondingly to achieve connection of other devices or production of application warning, and sent via an interconnection channel J11.

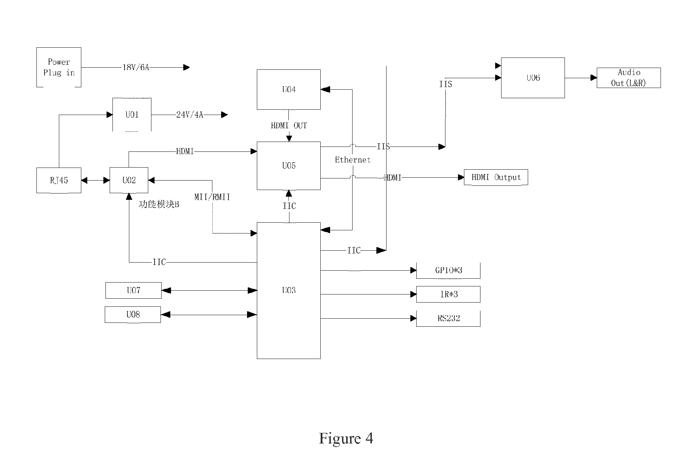

Figure 4 is one of embodiments of wiring diagram for this invention.

This invention acquires a 18V/6A power supply through power supply insertion terminal; or a 24V/4A power supply from a PoE receiving module U01 through a twisted-pair copper cable connected via RJ45 wiring terminal. Said PoE receiving module U01 can adopt a discrete component as well as an existing power supply integration module, such as, but not limited to, AG5600 module.

Said transmission modulation-demodulation module U02 connects a communication cable through said RJ45 wiring terminal, and adopts, for example, but not limited to, an integrated chip VS100RX to achieve separation of HDMI signal, Ethernet signal and control signal, wherein the output HDMI signal is transmitted to said lossless high definition signal switching matrix U05. Said integrated chip U03 (such as, but not limited to, RT3352) achieves the functions of Ethernet exchange module and Ethernet remote control extension processor, so Ethernet signals separated by said transmission modulation-demodulation module U02 are transmitted via MII interface to said Ethernet exchange module for swapping out two interfaces, one of which connects with said compressed media player U04 and the other one of which produces a series of control signals through decoding of said integrated chip U03. These control signals include internal control signals transferred via I2C bus to said transmission modulation-demodulation module U02, lossless high definition signal switching matrix U05 and audio power amplifier module U06; and external control signals, which provide external interfaces via some terminals, such as, but not limited to, three infrared serial ports, one RS232 serial port and three GPIO serial ports. Said integrated chip U07 and integrated chip U08 represent DDR2 (Double Data Rate 2), SDRAM or Flash memory which connects with RT3352. The outputs of said compressed media player U04 are sent to a lossless high definition signal switching matrix U05. Said compressed media player U04 can adopt, for example, but not limited to, a chip manufactured by TI Company, and adopts the daughter board design in this embodiment to facilitate insertion or disassembly.

When adopting an integrated circuit EP9423, said lossless high definition signal switching matrix U05 not only outputs HDMI signal, but separates one relevant audio signal, which is outputted via I2S bus to an audio amplifier U06, such as, but not limited to CS4525.

The above is only an embodiment of this invention, but not a limitation on the patent scope of the invention, so various equivalent structure transformations made based on the specification and figures of this invention are similarly included in the scope of patent protection of the present invention.

## Claims

1. A smart home access device comprises a transmission modulation-demodulation module with cable access, which demodulates digital transmission signals downloaded via said cable into digital video or audio signals and Ethernet signals to be output by different output terminals respectively, or modulates Ethernet signals input by an Ethernet signal output terminal to be uploaded via said cable, **characterized in that**:
it also comprises an Ethernet remote control extension processor, which receives and parses Ethernet signals downloaded by said transmission modulation-demodulation module to separate some control signals, or receives various control signals and encodes them into Ethernet signals to be uploaded to said transmission modulation-demodulation module.

2. The smart home access device according to Claim 1 is **characterized in that**:
the transmission modulation-demodulation module demodulates digital transmission signals downloaded via the cable into some control signals.

3. The smart home access device according to Claim 1 is **characterized in that**:
the Ethernet remote control extension processor includes a user control unit interface, which is used for electric connection or wireless interconnection with user control unit.

4. The smart home access device according to Claim 1 is **characterized in that**:
it comprises an Ethernet exchange module, which exchanges and transmits Ethernet signals downloaded by said transmission modulation-demodulation module to at least two Ethernet interfaces, one of which interfaces with said Ethernet remote control extension processor.

5. The smart home access device according to Claim 4 or Claim 7 is **characterized in that**:
the Ethernet exchange module also swaps out at least one WIFI AP functional interface.

6. The smart home access device according to Claim 4 is **characterized in that**:
it also comprises a compressed media player, which connects with said Ethernet exchange module via the other Ethernet interface of the Ethernet exchange module, and receives and decodes compressed media code streams carried by Ethernet signals to output the second digital video or audio signals;
it also comprises a signal switching matrix, which is used to select one from two digital video or audio signal inputs for outputting, one of which comes from said transmission modulation-demodulation module and the other one of which comes from said compressed media player.

7. The smart home access device according to Claim 6 is **characterized in that**:
the Ethernet exchange module also swaps out at least the third Ethernet interface.

8. The smart home access device according to Claim 6 is **characterized in that**:
Said signal switching matrix also selects and outputs audio signals.

9. The smart home access device according to Claim 8 is **characterized in that**:
it also comprises an audio power amplifier unit, which is used for power amplification of audio signals.

10. The smart home access device according to anyone of Claim 1 to Claim 9 is **characterized in that**:
it also comprises a PoE (Power over Ethernet) receiving module, which is used for acquiring the power supply on a twisted-pair copper cable to power said smart home access device.
